# EUROPÄISCHE PATENTANMELDUNG

(11) **EP 4 306 278 A1**
(43) Veröffentlichungstag der Anmeldung: **17.01.2024**
(21) Anmeldenummer: 23182178.6
(22) Anmeldetag: 28.06.2023
(51) Int. Cl.: B27B 9/04, B27B 27/08, B27G 19/10, B23D 47/02, B23D 59/00

(54) **ARBEITSORGAN**

(30) Priorität: 13.07.2022 DE 102022117524
(71) Anmelder: Mafell AG, 78727 Oberndorf a.N. (DE)
(72) Erfinder: HERMLE, Hans, 78661 Dietingen (DE)
(74) Vertreter: Manitz Finsterwald Patent- und Rechtsanwaltspartnerschaft mbB

(57) **Zusammenfassung**

Die Erfindung betrifft ein Arbeitsorgan zur Verwendung mit einem zu bearbeitenden Werkstück und einer elektrischen Bearbeitungsmaschine zum Bearbeiten des Werkstücks, wobei während der Bearbeitung ein Bearbeitungswerkzeug der Maschine und das Werkstück relativ zueinander bewegt werden, wobei das Arbeitsorgan eine Auflage für das Werkstück umfasst, die eine Auflagefläche aufweist, auf der das Werkstück während der Bearbeitung mit seiner Unterseite aufliegt, wobei in der Auflage eine an der Auflagefläche offene Aussparung für das Bearbeitungswerkzeug ausgebildet ist, und wobei im Bereich der Aussparung eine Spanreißschutzeinheit angeordnet ist, die eine durch das Einwirken des Bearbeitungswerkzeugs auf das Werkstück verursachte Spanabhebung an der Unterseite des Werkstücks verhindert.

## Beschreibung

Die Erfindung betrifft ein Arbeitsorgan zur Verwendung mit einem zu bearbeitenden Werkstück und einer elektrischen Bearbeitungsmaschine zum Bearbeiten des Werkstücks, wobei während der Bearbeitung ein Bearbeitungswerkzeug der Maschine und das Werkstück relativ zueinander bewegt werden, wobei das Arbeitsorgan eine Auflage für das Werkstück umfasst, die eine Auflagefläche aufweist, auf der das Werkstück während der Bearbeitung mit seiner Unterseite aufliegt, und wobei in der Auflage eine an der Auflagefläche offene Aussparung für das Bearbeitungswerkzeug ausgebildet ist.

Bei der Bearbeitungsmaschine kann es sich beispielsweise um das Sägeaggregat einer Tischkreissäge, Unterflur-Zugsäge, Tischkreissäge mit Schiebetisch, Kappsäge oder Kapp-Zugsäge handeln. Die Auflage des Arbeitsorgans kann dann von einem Arbeitstisch der Tischkreissäge oder Unterflur-Zugsäge oder von dem Schiebetisch einer Tischkreissäge oder von einer Auflage der Kappsäge oder Kapp-Zugsäge gebildet sein.

Bei der spanenden Bearbeitung insbesondere von Holz kommt es an denjenigen Seiten des Werkstücks, aus denen das Bearbeitungswerkzeug, beispielsweise das rotierende Sägeblatt einer Kreis- oder Kappsäge, austritt, zu einer auch als Ausreißen bezeichneten Spanabhebung, wodurch die optische Qualität des bearbeiteten Werkstücks an den durch die Bearbeitung entstehenden Trennkanten der jeweiligen betreffenden Werkzeugseite beeinträchtigt wird. Diese Spanabhebung ist also eine unerwünschte Erscheinung und folglich von der bei der eigentlichen spanenden Bearbeitung des Werkstücks erfolgenden Spanabhebung zu unterscheiden. Wenn im Folgenden von einer Spanabhebung die Rede ist, dann ist hierunter also die unerwünschte Spanabhebung an den Trennkanten zu verstehen.

Ursächlich für die Spanabhebung ist sowohl eine translatorische Relativbewegung zwischen Werkstück und Bearbeitungswerkzeugs als auch dessen Eigenbewegung, bei einer Kreis- oder Kappsäge also die Rotation des Sägeblatts. Dies bedeutet, dass bei einem vollständigen Durchtrennen eines Werkstücks mittels eines z.B. rotierenden Bearbeitungswerkzeugs zwar zwei der vier von dem Durchtrennen betroffenen Werkstückseiten im Wesentlichen nicht durch eine Spanabhebung beeinträchtigt sind, da sich an diesen Seiten das Bearbeitungswerkzeug in das Werkstück hineinbewegt. An den anderen beiden Werkstückseiten dagegen erfolgt eine Bewegung des Bearbeitungswerkzeugs aus dem Werkstück heraus, so dass auf das Material des Werkstücks Kräfte wirken, die aus dem Werkstück herausgerichtet sind, so dass es dort, wo das Bearbeitungswerkzeug aus dem Werkstück austritt, zu einer Spanabhebung kommen kann.

Es ist bereits bekannt, beim Arbeiten mit Kreissägen auf Führungsschienen eine Spanabhebung dadurch zu unterbinden, dass die Führungsschiene an derjenigen Seite, an der sich während der Bearbeitung das rotierende Sägeblatt der Kreissäge entlangbewegt, mit einer Gummilippe versehen wird. Die Führungsschiene und damit deren Gummilippe liegen bei der Bearbeitung auf dem Werkstück auf, so dass die Gummilippe an der Trennkante als Niederhalter wirksam ist und so eine Spanabhebung verhindert. Hierbei erfolgt der Ausreißschutz also an der Oberseite des Werkstücks, auf der die Führungsschiene aufliegt. Beim Arbeiten mit Bearbeitungssystemen, die eine Auflage aufweisen, auf denen das Werkstück mit seiner Unterseite aufliegt, sind derartige Führungsschienen ersichtlich nicht einsetzbar. Zu einem unerwünschten Ausreißen an der Unterseite eines Werkstücks, mit der dieses auf einer Auflage aufliegt, kann es nicht nur beim Sägen, sondern grundsätzlich bei allen spanabhebenden Bearbeitungen kommen, insbesondere beim Arbeiten mit Maschinen, die rotierende Bearbeitungswerkzeuge aufweisen, und zwar nicht nur Sägemaschinen, sondern beispielsweise auch Fräs- oder Hobelmaschinen.

Aufgabe der Erfindung ist es daher, eine Spanabhebung an einer Unterseite eines jeweiligen Werkstücks zu vermeiden, mit der das Werkstück während der Bearbeitung auf einer Auflage aufliegt.

Die Lösung dieser Aufgabe erfolgt jeweils durch die Merkmale der unabhängigen Ansprüche.

Bei dem erfindungsgemäßen Arbeitsorgan ist vorgesehen, dass im Bereich der Aussparung für das Bearbeitungswerkzeug, die in der Auflage ausgebildet ist, eine Spanreißschutzeinheit angeordnet ist, die eine durch das Einwirken des Bearbeitungswerkzeugs auf das Werkstück verursachte Spanabhebung an der Unterseite des Werkstücks verhindert.

Anders als eine Führungsschiene mit Gummilippe, die auf der Oberseite des Werkstücks aufliegt, ist durch die erfindungsgemäße Spanreißschutzeinheit die Unterseite des Werkstücks geschützt, mit der das Werkstück auf der Auflage des Arbeitsorgans aufliegt.

Die Auflage kann von einem Arbeitstisch einer Tischkreissäge oder einer Unterflur-Zugsäge oder von dem Schiebetisch einer Tischkreissäge oder von einer Auflage einer Kappsäge oder einer Kapp-Zugsäge gebildet sein. Bei einer Tischkreissäge liegt das Werkstück auf dem Arbeitstisch auf, in welchem eine schlitzförmige Aussparung ausgebildet ist, durch die ein Sägeblatt nach oben vorsteht, das an einer unterhalb des Arbeitstisches angeordneten Antriebseinheit angebracht ist. Bei einer Unterflur-Zugsäge kann die Antriebseinheit samt Sägeblatt von einem Benutzer relativ zum Arbeitstisch in einer Bearbeitungsrichtung bewegt werden, wobei sich das Sägeblatt in dem im Arbeitstisch ausgebildeten Schlitz bewegt. Bei einer Tischkreissäge mit Schiebetisch steht die Antriebseinheit des Sägeblatts still und liegt das Werkstück auf einem Schiebetisch auf, der relativ zum Sägeblatt bewegt wird, um das Werkstück durch das Sägeblatt hindurch zu bewegen. Bei einer Kappsäge ist das eine Antriebseinheit und ein Sägeblatt aufweisende Sägeaggregat oberhalb einer Werkstückauflage angeordnet und an einem beweglichen Führungsarm angebracht, der mit der Auflage oder einem fest mit der Auflage verbundenen Gestell verbunden ist. Je nach konkreter Ausgestaltung kann das Sägeaggregat entweder im Wesentlichen nur in vertikaler Richtung oder zusätzlich auch in horizontaler Richtung bewegt werden. In letzterem Fall spricht man auch von einer Kapp-Zugsäge. Die Werkstückauflage ist mit einer schlitzförmigen Aussparung versehen, in die das Sägeblatt eintauchen kann, wenn ein Werkstück vollständig durchtrennt werden soll.

Wenn beispielsweise eine Tischkreissäge oder eine Kappsäge mit einem erfindungsgemäßen Arbeitsorgan versehen ist, also einer Anordnung aus Auflage und Spanreißschutzeinheit, dann wird durch die im Bereich der schlitzförmigen Aussparung angeordnete Spanreißschutzeinheit die Unterseite des jeweiligen Werkstücks, das auf der Auflage aufliegt, vor einer durch die Bearbeitung verursachten Spanabhebung geschützt.

Weitere vorteilhafte Ausführungsbeispiele der Erfindung sind in den abhängigen Ansprüchen, der nachstehenden Beschreibung sowie der Zeichnung angegeben.

In einigen Ausführungsbeispielen kann vorgesehen sein, dass die Spanreißschutzeinheit die Aussparung zumindest ungefähr in der Ebene der Auflagefläche wenigstens bereichsweise begrenzt oder parallel zur Auflagefläche in die Aussparung hinein vorsteht. Die Spanreißschutzeinheit kann also selbst zumindest einen Bereich der Aussparung begrenzen, oder die Spanreißschutzeinheit kann zumindest an einer Seite der Aussparung über eine Begrenzung der Aussparung hinausragen und somit in die Aussparung hinein vorstehen.

Gemäß weiteren Ausführungsbeispielen kann vorgesehen sein, dass die Spanreißschutzeinheit für zumindest einen Ausreißschutzbereich der Spanreißschutzeinheit aus einem anderen Material besteht als die Auflage an der Auflagefläche. Die Spanreißschutzeinheit kann, muss aber nicht einstückig ausgebildet sein. Wenn die Spanreißschutzeinheit nicht einstückig ausgebildet ist, dann kann sie an einem Ausreißschutzbereich, der als Spanreißschutz wirksam ist, aus einem anderen Material bestehen als ein Trägerabschnitt der Spanreißschutzeinheit, an welchem der Ausreißschutzbereich fest oder lösbar angebracht ist. Auch dann, wenn die Spanreißschutzeinheit einstückig ausgebildet ist, kann zwischen einem als Spanreißschutz wirksamen Ausreißschutzbereich und einem Trägerabschnitt unterschieden werden, mit dem die Spanreißschutzeinheit beispielsweise an der Auflage oder einem, insbesondere zur Auflage gehörenden, Halter angebracht ist.

Wenn das Arbeitsorgan zur Verwendung mit einer Bearbeitungsmaschine ausgebildet ist, die als Bearbeitungswerkzeug ein Sägeblatt aufweist, beispielsweise ein während der Bearbeitung rotierendes Sägeblatt einer Kreissäge oder ein sich während der Bearbeitung auf- und abbewegendes Sägeblatt einer Stichsäge, dann kann die in der Auflage ausgebildet Aussparung schlitzförmig ausgebildet sein.

Gemäß einigen Ausführungsformen kann vorgesehen sein, dass die Spanreißschutzeinheit entweder einseitig oder beidseitig einer von dem Bearbeitungswerkzeug definierten Trennebene angeordnet ist. Die Spanreißschutzeinheit kann also einseitig oder beidseitig wirksam sein. Wenn das Bearbeitungswerkzeug das Werkstück in einer Ebene durchtrennt, ein Werkstück beispielsweise mit dem Sägeblatt einer Kreissäge durchgesägt wird, dann entstehen auf beiden Seiten dieser Trennebene am Werkstück Trennkanten. Bei einseitiger Wirksamkeit der Spanreißschutzeinheit ist z.B. ein separates Ausreißschutzelement oder - allgemein - ein Ausreißschutzbereich der Spanreißschutzeinheit nur auf einer Seite der Trennebene, z.B. auf einer Seite des Sägeblatts, angeordnet. Bei beidseitiger Wirksamkeit ist der Ausreißschutzbereich zweiteilig oder es sind zwei Ausreißschutzbereiche vorhanden, wobei die beiden Teile bzw. Bereiche zu beiden Seiten der Trennebene, z.B. des Sägeblatts, angeordnet sind und beispielsweise gemeinsam eine Ausreißschutzfläche mit einem - für ein Sägeblatt z.B. schlitzförmigen - Durchgang für das Bearbeitungswerkzeug bilden. Folglich können bei beidseitiger Wirksamkeit beide Trennkanten vor einem Ausreißen geschützt werden, d.h. nicht nur am "guten" Teil, sondern auch am "Abfallteil" des Werkstücks wird an der jeweiligen Trennkante eine Spanabhebung verhindert. Dies ist ersichtlich besonders vorteilhaft, wenn beide Teile des Werkstücks weiterverwendet werden sollen, zwischen einem "guten" Teil und einem "Abfallteil" also nicht unterschieden werden kann.

Gemäß einigen Ausführungsbeispielen kann die Spanreißschutzeinheit an der Auflage angebracht sein. Dabei kann die Spanreißschutzeinheit lösbar angebracht sein. Alternativ kann die Spanreißschutzeinheit einen festen Bestandteil der Auflage bilden, kann dabei aber zumindest bereichsweise aus einem anderen Material bestehen als die Auflage.

Die Spanreißschutzeinheit kann, insbesondere lösbar, an einem, bevorzugt ein separates Bauteil bildenden, Halter angeordnet sein. Der Halter kann an der Auflage angeordnet und insbesondere relativ zur Auflage bewegbar sein.

Dabei kann die Spanreißschutzeinheit ein separates Ausreißschutzelement sein oder umfassen, die Spanreißschutzeinheit kann aber auch einstückig mit dem Halter ausgebildet sein, d.h. der Halter selbst bildet hierbei selbst einen Spanreißschutz, wobei der Halter einen die unerwünschte Spanabhebung verhindernden Ausreißschutzbereich und einen weiteren Abschnitt umfassen kann, über den der Halter z.B. zwecks eines Nachstellens verstellt und/oder bewegbar an einem anderen Bauteil, insbesondere der Auflage oder einem separaten Einlegestück der Auflage, angeordnet sein kann.

Der Halter kann an einem separaten Einlegestück der Auflage angeordnet sein, das in einem eingelegten Zustand zusammen mit zumindest einem benachbarten Teil der Auflage die Auflagefläche bildet, insbesondere wobei die Aussparung in dem Einlegestück ausgebildet ist.

Das Einlegestück kann beispielsweise platten- oder streifenförmig ausgebildet sein. Ein solches separates Einlegestück kann beispielsweise in ein Gestell eines Arbeitstisches eingelegt werden und im eingelegten Zustand gemeinsam mit einem oder mehreren seitlich benachbarten, entweder nicht herausnehmbaren oder ebenfalls entnehmbaren Teilen den Arbeitstisch oder die Arbeitstischplatte und somit die Auflagefläche für das jeweilige Werkstück bilden.

Dabei kann vorgesehen sein, dass das Einlegestück eine ohne das Einlegestück in der Auflage vorhandene Lücke zumindest im Wesentlichen vollständig ausfüllt.

Die Oberseite des Einlegestücks kann einen Teil der Auflagefläche der Auflage bilden.

Das Einlegestück kann aus dem gleichen Material bestehen wie der zumindest eine benachbarte Teil der Auflage.

Gemäß einigen Ausführungsbeispielen kann vorgesehen sein, dass die Spanreißschutzeinheit ein separates Ausreißschutzelement ist oder ein separates Ausreißschutzelement umfasst. Das Ausreißschutzelement kann, insbesondere werkzeuglos, auswechselbar an der Auflage anbringbar sein, insbesondere an einem separaten Halter der Auflage. Das Ausreißschutzelement kann in zumindest eine an der Auflage oder an dem Halter ausgebildete Aufnahme einschiebbar, einsteckbar oder eindrückbar sein. Das Ausreißschutzelement kann eine langgestreckte Form aufweisen. Das Ausreißschutzelement kann aus Kunststoff oder Gummi hergestellt sein. Das Ausreißschutzelement kann elastisch verformbar sein.

Unabhängig davon, ob ein separates Ausreißschutzelement oder ein einstückig mit einem Trägerabschnitt der Spanreißschutzeinheit vorgesehener Ausreißschutzbereich vorgesehen ist, kann gemäß weiteren Ausführungsbeispielen vorgesehen sein, dass die Spanreißschutzeinheit, insbesondere ein Ausreißschutzbereich der Spanreißschutzeinheit, durch erstmalige Bearbeitung mittels des Bearbeitungswerkzeugs anpassbar ist. Wenn es sich bei der elektrischen Bearbeitungsmaschine um eine Säge, beispielsweise eine Tischkreissäge oder eine Kappsäge handelt, dann wird dieser Vorgang des Anpassens auch als Einsägen bezeichnet. Die Ausgestaltung der Spanreißschutzeinheit derart, dass sie mittels des jeweiligen Bearbeitungswerkzeugs bearbeitet werden kann, eröffnet die Möglichkeit einer anfänglichen Überdimensionierung oder Anordnung der Spanreißschutzeinheit derart, dass sie in den Arbeitsbereich des Bearbeitungswerkzeugs hinein vorsteht, so dass bei erstmaliger Bearbeitung eine exakte Anpassung der Spanreißschutzeinheit dahingehend erfolgen kann, dass sie über die gesamte Länge in Bearbeitungsrichtung gesehen an das Bearbeitungswerkzeug heranreicht und somit die Trennkante des jeweiligen Werkstücks vollständig beaufschlagt, so dass dort eine Spanabhebung zuverlässig unterbunden ist.

Gemäß weiteren Ausführungsbeispielen kann die Auflage mit einer Nachstellfunktion für die Spanreißschutzeinheit versehen sein. Durch eine solche Nachstellfunktion kann eine sich während der Benutzung abnutzende Kante der Spanreißschutzeinheit durch erneute Bearbeitung, also beispielsweise durch erneutes "Einsägen" - sozusagen erneuert werden, d.h. es wird quasi eine "nachwachsende Spanreißschutzeinheit" bereitgestellt. Eine jeweilige Spanreißschutzeinheit kann somit länger genutzt werden, bevor sie ausgewechselt werden muss, als bei einer Anordnung ohne eine solche Nachstellfunktion.

Eine Nachstellfunktion kann beispielsweise dadurch realisiert werden, dass die Spanreißschutzeinheit an einer im Bereich der Aussparung liegenden Seite eines Nachstellabschnitts angeordnet ist, der durch eine Betätigungseinrichtung relativ zur Aussparung derart bewegbar ist, dass die Spanreißschutzeinheit in die Aussparung hinein nachstellbar ist.

Der Nachstellabschnitt kann als ein, bevorzugt ein separates Bauteil bildender, Halter für die Spanreißschutzeinheit ausgebildet sein. Dabei kann der Halter an der Auflage angeordnet sein. Vorzugsweise ist der Halter relativ zu der Auflage bewegbar. Bevorzugt befindet sich der Halter unterhalb der Auflagefläche. Der Halter kann an einer Unterseite der Auflage angeordnet sein.

Bei dem Halter handelt es sich insbesondere um einen Halter, wie er vorstehend - insbesondere im Zusammenhang mit einem separaten Einlegestück der Auflage - beschrieben ist.

Die Betätigungseinrichtung kann zumindest ein Exzenterstück umfassen, das durch Betätigen den Nachstellabschnitt relativ zu einem Basisabschnitt und relativ zur Aussparung bewegt. Das Betätigen kann durch Verdrehen um eine senkrecht zur Auflagefläche verlaufende Achse erfolgen. Der Basisabschnitt kann zur Auflage gehören und einen Teil der Auflagefläche bilden. Bei dem Basisabschnitt kann es sich um ein separates, insbesondere platten- oder streifenförmiges, Einlegestück der Auflage handeln, insbesondere wie es vorstehend im Zusammenhang mit einem Halter für die Spanreißschutzeinheit beschrieben ist.

Das Exzenterstück und der Nachstellabschnitt können nach Art eines Getriebes zusammenwirken, um eine Betätigungsbewegung des Exzenterstücks in eine Nachstellbewegung des Nachstellabschnitts umzusetzen.

Das Exzenterstück kann bündig mit der Auflagefläche abschließen oder bezüglich der Auflagefläche zurückspringend angeordnet sein.

Über einen Treibabschnitt, der exzentrisch bezüglich einer Achse, um die das Exzenterstück durch Betätigen verdrehbar ist, an einem Betätigungsabschnitt des Exzenterstücks angeordnet ist, kann das Exzenterstück den Nachstellabschnitt zum Bewegen beaufschlagen. Der Treibabschnitt kann ein sich parallel zur Verdrehachse erstreckender Stift sein, der mit einem Langloch des Nachstellabschnitts zusammenwirkt. Der Betätigungsabschnitt kann kreiszylindrisch ausgebildet sein und einen oder mehrere kreiszylindrische Abschnitte unterschiedlichen Durchmessers umfassen.

Gemäß weiteren Ausführungsformen kann zusätzlich zu der Spanreißschutzeinheit, die eine Spanabhebung an der Unterseite des Werkstücks verhindert, ein Spanreißschutzabschnitt vorgesehen sein, der eine durch das Einwirken des Bearbeitungswerkzeugs auf das Werkstück verursachte Spanabhebung an einer von der Unterseite verschiedenen Seite des Werkstücks verhindert, wobei der Spanreißschutzabschnitt von der Auflagefläche absteht.

Während eine Führungsschiene mit Gummilippe, wie eingangs erläutert, eine Spanabhebung an einer Oberseite eines jeweiligen Werkstücks unterbinden kann und durch die erfindungsgemäße Spanreißschutzeinheit die auf einer Auflage aufliegende Werkstückunterseite vor einem Ausreißen geschützt werden kann, kann das Werkstück an seiner vorderen oder hinteren Werkstückseite weiterhin ausrei-βen, wenn die Bearbeitung derart erfolgt, dass das Bearbeitungswerkzeug an der Vorderseite oder an der Rückseite der Werkstücks austritt. Dies kann beispielsweise dann passieren, wenn das Bearbeitungswerkzeug in einer parallel zur Auflagefläche verlaufenden Bearbeitungsrichtung durch das Werkstück hindurchbewegt wird, wie es beispielsweise bei einer Unterflur-Zugsäge, bei einer Tischkreissäge mit Schiebetisch oder bei einer Kapp-Zugsäge der Fall ist.

Durch einen zusätzlich zu der die Unterseite schützenden Spanreißschutzeinheit vorgesehenen Spanreißschutzabschnitt, der von der Auflagefläche absteht, kann folglich zusätzlich zur Unterseite des Werkstücks eine Werkstückseite geschützt werden, die nicht auf der Auflagefläche aufliegt. Wie eingangs erläutert, tritt beim Arbeiten mit rotierenden Bearbeitungswerkzeugen das Problem der Spanabhebung an zwei von vier Werkstückseiten ohnehin nicht auf. Da die Werkstückunterseite durch die Spanreißschutzeinheit geschützt ist, kann der zusätzliche, von der Auflagefläche abstehende Spanreißschutzabschnitt dafür sorgen, dass auch nicht an der vierten Werkstückseite und somit an keiner der vier Werkstückseiten eine Spanabhebung auftritt.

Dabei kann vorgesehen sein, dass die Spanreißschutzeinheit, insbesondere ein Ausreißschutzbereich der Spanreißschutzeinheit, zusammen mit dem Spanreißschutzabschnitt, insbesondere einem Ausreißschutzbereich des Spanreißschutzabschnitts, einen von 180° verschiedenen, insbesondere unterschiedlich einstellbaren, Spanschutzwinkel bildet, der eine Ebene aufspannt, die einen von 0° verschiedenen, insbesondere unterschiedlich einstellbaren, Winkel mit der Auflagefläche einschließt.

Die Spanreißschutzeinheit und der von der Auflagefläche abstehende Spanreißschutzabschnitt können so gemeinsam zwei Werkstückseiten vor einem Ausrei-βen schützen. Die in bevorzugten Ausgestaltungen mögliche Einstellbarkeit der genannten Winkel ermöglicht eine Anpassung an die jeweilige Werkstückgeometrie und/oder an die jeweilige Bearbeitungssituation.

Dabei kann vorgesehen sein, dass die Spanreißschutzeinheit und der Spanreißschutzabschnitt aneinanderstoßend angeordnet sind. Der Übergang zwischen der Unterseite eines jeweiligen Werkstücks einerseits und dessen Vorderseite oder Rückseite andererseits kann hierdurch vollständig vor einem Ausreißen geschützt werden.

Des Weiteren kann vorgesehen sein, dass die Spanreißschutzeinheit und der Spanreißschutzabschnitt derart angeordnet sind, dass sie gleichzeitig durch erstmalige Bearbeitung mittels des Bearbeitungswerkzeugs anpassbar sind und somit nach der erstmaligen Bearbeitung bündig miteinander abschließen.

Der von der Auflagefläche abstehende Spanreißschutzabschnitt kann als eine separate Baueinheit ausgebildet sein, die mit der Auflage lösbar verbunden ist.

Gemäß weiteren Ausführungsbeispielen kann vorgesehen sein, dass der Spanreißschutzabschnitt mit der Oberseite der Auflage, insbesondere lösbar, verbunden ist, oder dass der Spanreißschutzabschnitt ein Bestandteil einer Anschlageinrichtung ist, die mit der Auflage, insbesondere lösbar, koppelbar ist und als, insbesondere verstellbarer, Anschlagabschnitt für das Werkstück dient. Verstellbare Anschläge für verschiedene Arten von Tischkreissägen, z.B. Unterflur-Zugsägen oder Tischkreissägen mit Schiebetisch, sind dem Fachmann grundsätzlich bekannt, so dass hierauf nicht näher eingegangen zu werden braucht. Der von der Auflagefläche abstehende Spanreißschutzabschnitt kann in vielfältiger Weise in eine derartige Anschlageinrichtung integriert werden.

Ein Werkstückanschlag, der gleichzeitig als Spanreißschutz verwendet wird, braucht nicht so vergleichsweise komplex aufgebaut zu sein wie die erwähnten bekannten verstellbaren Anschläge für Tischkreissägen oder Unterflur-Zugsägen. Alternativ kann gemäß einigen Ausführungsformen ein z.B. quaderförmiges, insbesondere stab- oder kastenförmiges einfaches Anschlagelement aus zum Beispiel Kunststoff, Holz oder Aluminium oder einem anderen mit einem herkömmliches Sägeblatt einsägbaren Material als entweder fester oder verschiebbarer und somit nachstellbarer und folglich "trimmbarer" Spanreißschutz vorgesehen sein.

Ein solches Anschlagelement kann z.B. einfach an einer insbesondere ohnehin bereits vorhandenen Einrichtung einer jeweiligen Maschine, z.B. an einer bereits vorhandenen Anschlageinrichtung, angebracht werden, beispielweise durch Verschrauben, wobei zum Nachstellen Langlöcher im Anschlagelement für die Schraube oder Schrauben vorgesehen sein können. Vorhandene Einrichtungen, die z.B. aus einem Material wie beispielsweise Aluminium bestehen, das für ein "Trimmen" z.B. durch Einsägen ungeeignet oder weniger geeignet ist, oder die aus anderen Gründen nicht eingesägt werden sollen, können so mit einem als Spanreißschutz dienenden Anschlagelement nachgerüstet werden, das insbesondere aus einem zum "Trimmen" besonders geeigneten Material wie z.B. Holz besteht.

Die Erfindung betrifft außerdem ein Bearbeitungssystem mit wenigstens einer elektrischen Bearbeitungsmaschine zum Bearbeiten eines Werkstücks und mit zumindest einem erfindungsgemäßen Arbeitsorgan wie hierin offenbart, insbesondere wie vorstehend beschrieben. Insbesondere ist vorgesehen, dass die Spanreißschutzeinheit bis an eine Ebene heranreicht, die durch das Bearbeitungswerkzeug definiert ist und in der eine durch Bearbeiten mit dem Bearbeitungswerkzeug entstehende Trennkante des Werkstücks liegt. Hierdurch ist sichergestellt, dass die Spanreißschutzeinheit das Werkstück bis an die Trennkante heran beaufschlagt und so das Werkstück an dieser Seite des Bearbeitungswerkzeugs optimal vor Spanabhebung schützt.

Des Weiteren betrifft die Erfindung eine Anordnung aus einem Einlegestück samt Halter und einer Spanreißschutzeinheit eines erfindungsgemäßen Arbeitsorgans, wie hierin offenbart, insbesondere wie vorstehend beschrieben.

Die Erfindung wird im Folgenden beispielhaft unter Bezugnahme auf die Zeichnung beschrieben. Es zeigen:
- Fig. 1: schematisch eine Kapp-Zugsäge mit einem erfindungsgemäßen Arbeitsorgan,
- Fig. 2: schematisch eine Unterflur-Zugsäge mit einem erfindungsgemäßen Arbeitsorgan,
- Fig. 3 und 4: eine Ausführungsform eines erfindungsgemäßen Arbeitsorgans mit einem Arbeitstisch als Werkstückauflage,
- Fig. 5: eine Abwandlung der in den Fig. 3 und 4 gezeigten Ausführungsform, und
- Fig. 6: einen Schnitt senkrecht zur Auflagefläche zur Erläuterung einer Nachstellfunktion für den Spanreißschutz der Ausführungsformen der Fig. 3 bis 5.

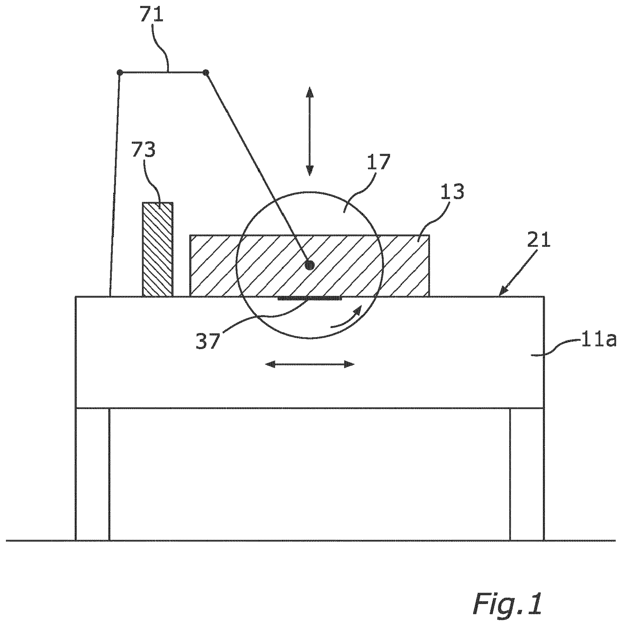

Fig. 1 zeigt schematisch eine Kappsäge, deren Sägeaggregat, von dem lediglich das Sägeblatt 17 dargestellt ist, an einem Führungsarm 71 angebracht ist, der mit einem als Auflage 11a für ein zu bearbeitendes Werkstück 13 dienenden Arbeitstisch angebracht ist. Die Oberseite des Arbeitstisches 11a bildet eine Auflagefläche 21, auf welcher das Werkstück 13 mit seiner Unterseite aufliegt.

Das Sägeblatt 17 ist mittels des Führungsarms 71 in vertikaler Richtung und in horizontaler Richtung relativ zum fest auf dem Arbeitstisch 11a aufliegenden, während der Bearbeitung an einem optionalen Anschlag 73 anliegenden Werkstück 13 bewegbar, um das Werkstück 13 zu bearbeiten.

Im Arbeitstisch 11a ist eine schlitzförmige Aussparung ausgebildet, in die das rotierende Sägeblatt 17 eintauchen kann, um das Werkstück 13 vollständig durchtrennen zu können. Die Rotationsrichtung des Sägeblatts 17 ist durch einen Pfeil angedeutet. Damit es dabei an den Trennkanten der Werkstückunterseite nicht zu einer Spanabhebung kommt, ist im Bereich dieser Aussparung eine in Fig. 1 nur schematisch angedeutete Spanreißschutzeinheit 37 angeordnet, die zusammen mit der Auflage 11a ein Arbeitsorgan im Sinne der vorliegenden Offenbarung bildet.

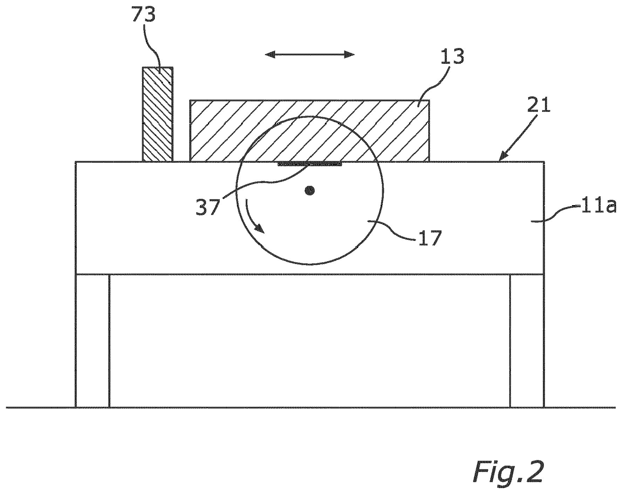

In Fig. 2 ist schematisch eine Unterflur-Zugsäge dargestellt. Diese umfasst einen Arbeitstisch 11a als Auflage für ein jeweils zu bearbeitendes Werkstücks 13 mit einer als Auflagefläche 21 dienenden Oberseite. Das Werkstück 13 liegt somit mit seiner Unterseite auf der Auflagefläche 21 auf. Das Sägeaggregat, von dem hier wiederum nur das Sägeblatt 17 dargestellt ist, befindet sich unterhalb der Auflage 11a. Durch einen in der Auflage 11a ausgebildeten, sich in einer durch den Doppelpfeil angeordneten Bearbeitungsrichtung erstreckenden Schlitz steht das Sägeblatt 17 nach oben über die Auflagefläche 21 hinaus vor. Während der Bearbeitung bewegt sich das Werkstück 13 entlang der Bearbeitungsrichtung durch das rotierende Sägeblatt 17 hindurch. Die Rotationsrichtung des Sägeblatts 17 ist wiederum durch einen Pfeil angedeutet. Damit es an der Unterseite des Werkstücks 13 nicht zu einer Spanabhebung kommt, ist im Bereich der erwähnten Aussparung eine hier wiederum nur schematisch angedeutete Spanreißschutzeinheit 37 angeordnet, die zusammen mit der Auflage 11a ein Arbeitsorgan im Sinne der vorliegenden Offenbarung bildet.

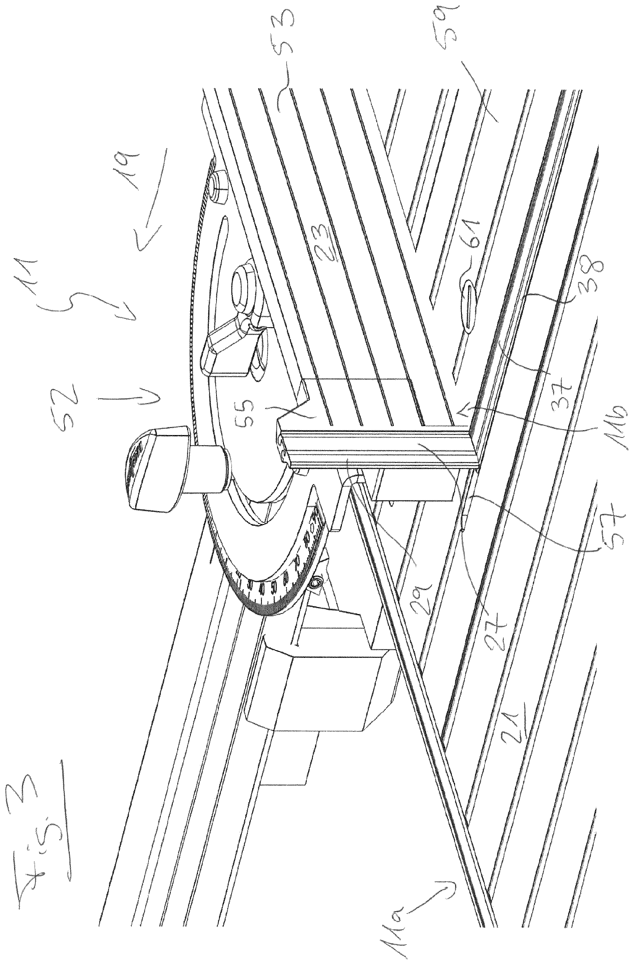

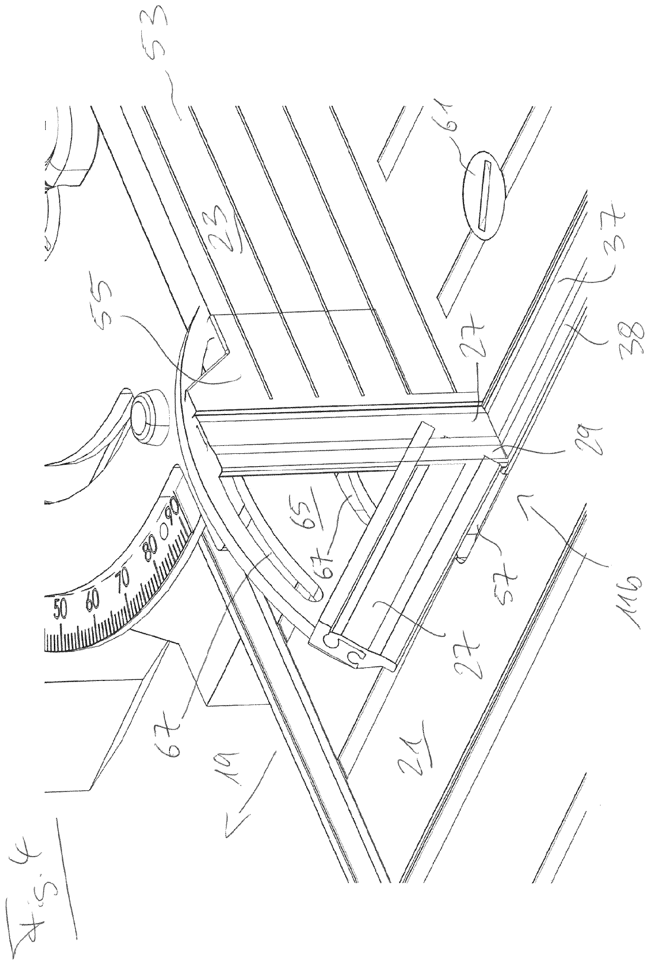

Ein mögliches Ausführungsbeispiel einer erfindungsgemäßen Unterflur-Zugsäge wird nachstehend anhand der Fig. 3 und 4 beschrieben, die jeweils lediglich einen Ausschnitt in einer perspektivischen Darstellung zeigen, und zwar eines Bereiches, an dem eine erfindungsgemäße Spanreißschutzeinheit 37 und ein zusätzlicher Spanreißschutzabschnitt 11b zusammenwirken.

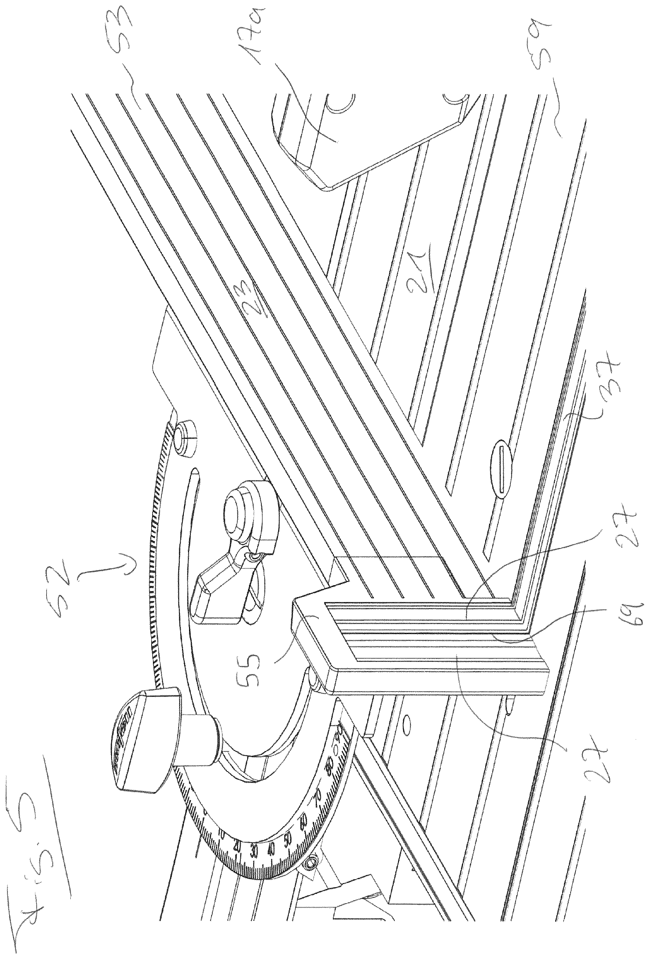

Das erfindungsgemäße Arbeitsorgan umfasst eine Arbeitstisch 11a als Auflage und eine Anschlageinrichtung 52, wobei der Spanreißschutzabschnitt 11b einen Bestandteil der Anschlageinrichtung 52 bildet und an einem Anschlagabschnitt 53 angeordnet ist. Der Arbeitstisch 11a bildet zusammen mit einem eine elektrische Bearbeitungsmaschine bildenden Sägeaggregat, von dem in Fig. 5 lediglich ein Teil einer das nicht gezeigte Sägeblatt abdeckenden Schutzhaube 17a dargestellt ist, eine Unterflur-Zugsäge, wie sie im Einleitungsteil sowie vorstehend erläutert worden ist. Derartige Maschinen sind grundsätzlich bekannt, so dass hierauf nicht näher eingegangen zu werden braucht.

Das Sägeaggregat mit der Antriebseinheit für das Sägeblatt befindet sich unterhalb der Auflage 11a, deren Oberseite die Auflagefläche 21 für ein jeweils zu bearbeitendes Werkstück (nicht dargestellt) bildet, auf der das Werkstück mit seiner Unterseite während der Bearbeitung aufliegt. Bei der Bearbeitung wird nicht das Werkstück entlang des Arbeitstisches 11a bewegt, sondern der Benutzer zieht das Sägeaggregat manuell mit Hilfe einer Zugeinrichtung in einer Bearbeitungsrichtung 19 durch das Werkstück hindurch.

Hierzu ist in der Auflage 11a ein sich in Bearbeitungsrichtung 19 erstreckender Schlitz 57 für das Sägeblatt ausgebildet. In dem hier dargestellten Ausführungsbeispiel ist diese schlitzförmige Aussparung 57 in einem separaten, streifenförmigen Einlegestück 59 ausgebildet. Dieses Einlegestück 59 kann in ein Gestell des Arbeitstisches 11a eingelegt werden und bildet im eingelegten Zustand gemäß den Fig. 3 und 4 gemeinsam mit seitlich benachbarten, entweder nicht herausnehmbaren oder ebenfalls entnehmbaren Teilen die Tischplatte des Arbeitstisches 11a und somit die Auflagefläche 21 für das Werkstück.

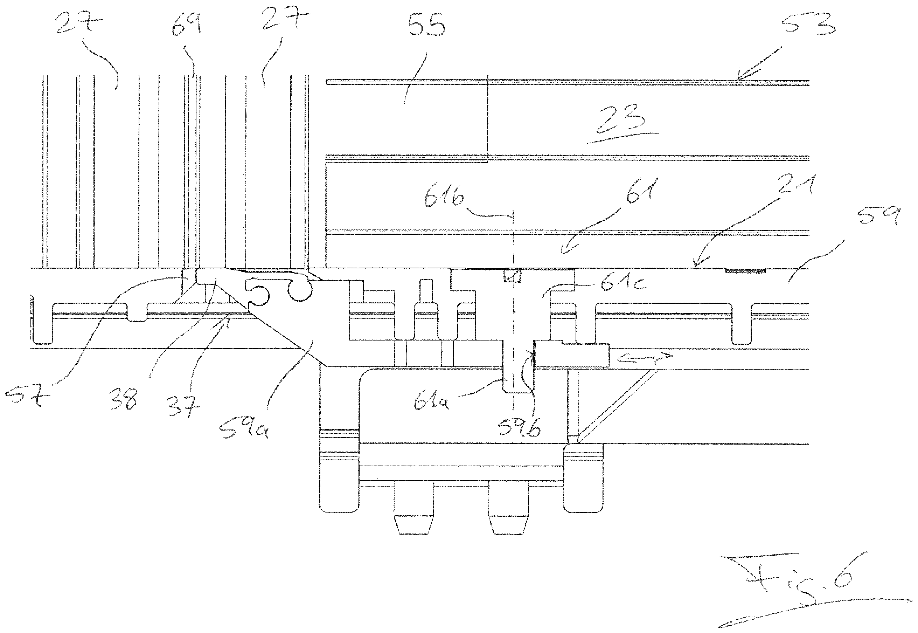

Wie anhand von Fig. 6 näher beschrieben wird, ist an dem Einlegestück 59 ein Halter angeordnet, an dem eine als Gummilippe ausgebildete Spanreißschutzeinheit 37, die einen als Spanreißschutz wirksamen Ausreißschutzbereich 38 aufweist, auswechselbar angebracht ist. Bei eingelegtem Einlegestück 59 gemäß den Fig. 3 und 4 verläuft die Gummilippe 37 parallel zur Auflagefläche 21 und steht derart weit seitlich in den Schlitz 57 hinein vor, dass die Gummilippe 37 bei einer Erstbearbeitung mittels des Sägeblatts eingesägt werden kann, um so während der nachfolgenden Werkstückbearbeitung bis an die entsprechende Seite des Sägeblatts heranzureichen.

Auf diese Weise bildet die in der Auflagefläche 21 angeordnete Gummilippe 37 einen Spanreißschutz für die auf der Auflagefläche 21 aufliegende Unterseite eines jeweiligen Werkstücks - analog zu der Spanreißschutz-Funktion der im Einleitungsteil beschriebenen Gummilippe einer Führungsschiene, wobei es dort die Oberseite des Werkstücks ist, auf der die Führungsschiene mit der Gummilippe aufliegt und die somit vor einem Ausreißen geschützt wird.

Mittels Exzenterstücken 61 (vgl. auch Fig. 6), die von einem Benutzer mit Hilfe eines Schraubendrehers verdreht werden können, kann der erwähnte Halter, an dessen von den Exzenterstücken 61 abgewandten Seite die Gummilippe 37 angebracht ist, senkrecht zur Bearbeitungsrichtung 19 relativ zum Einlegestück 59 verschoben werden, um auf diese Weise die Gummilippe 37 weiter in den Schlitz 57 hinein vorzuschieben. Auf diese Weise ist eine Nachstellfunktion realisiert, mit der eine sich während der Benutzung abnutzende Kante der Gummilippe 37 - durch erneutes "Einsägen" - sozusagen erneuert werden kann. Diese in das Einlegestück 59 integrierte Nachstellfunktion stellt somit eine "nachwachsende" Gummilippe 37 bereit. Die von einer jeweiligen Gummilippe 37 gebildete Spanreißschutzeinheit kann somit länger genutzt werden, bevor sie ausgewechselt werden muss, als bei einer Anordnung ohne eine solche Nachstellfunktion.

Die Unterflur-Zugsäge umfasst außerdem eine separate Anschlageinrichtung 52, die mit seitlich am Arbeitstisch 11a angebrachten Profilen, z.B. mit schwalbenschwanzförmigem Querschnitt, gekoppelt ist und in einem gelösten Zustand entlang dieser Profile verschoben werden kann, um einen eine Anschlagfläche 23 bereitstellenden Anschlagabschnitt 53 in einer für die jeweilige Anwendung erforderlichen Weise zu positionieren. Eine solche Anschlageinrichtung 52, deren Koppelbarkeit mit dem Arbeitstisch 11a und die verschiedenen Verstellmöglichkeiten sind dem Fachmann in Verbindung mit Tischkreissägen allgemein und insbesondere Unterflur-Zugsägen grundsätzlich bekannt, so dass hierauf nicht näher eingegangen zu werden braucht.

Bei dem Anschlagabschnitt 53 handelt es sich um ein Aluminiumprofil, das an seinem im Arbeitsbereich liegenden Ende mit einem Halter 55 aus Kunststoff verbunden ist, in den ein separates Ausreißschutzelement 27, das einen als Spanreißschutz wirksamen Ausreißschutzbereich 29 aufweist, in Form einer Gummilippe eingeschoben werden kann. Hierfür ist am Halter 55 ein Profil ausgebildet, das zwei Nuten mit jeweils teilkreisförmigem Querschnitt umfasst, wobei das Ausreißschutzelement 27 ein entsprechend komplementäres Profil besitzt.

Die zum Sägeblatt hin weisende Seite des Halters 55 schließt bündig mit der entsprechenden Seite des Anschlagabschnitts 53 ab und bildet somit einen Bestandteil der Anschlagfläche 23.

Der Halter 55 kann austauschbar am Anschlagabschnitt 53 angebracht und in seiner Montagestellung z.B. durch eine Verrastung fixiert sein. Auf diese Weise kann ein schnelles und einfaches Auswechseln des Ausreißschutzelements 27 ermöglicht werden, ohne das Ausreißschutzelement 27 bei an der Maschine verbleibendem Halter 55 auswechseln zu müssen.

Es können unterschiedliche Halter 55 vorgesehen sein, aus denen der Benutzer auswählen kann, um für eine jeweilige Anwendung den passenden Halter 55 und das passende Ausreißschutzelement 27 am Anschlagabschnitt 53 anbringen zu können. Die unterschiedlichen Halter 55 können sich hinsichtlich eines jeweils angebrachten Ausreißschutzelementes 27 und/oder hinsichtlich anderer Eigenschaften wie z.B. Form, Größe oder Material voneinander unterscheiden. Es ist auch nicht zwingend, an einem Halter 55 ein separates Ausreißschutzelement 27 vorzusehen. Der Halter 55 selbst kann als Ausreißschutz dienen und z.B. aus einem einsägbaren Material hergestellt sein, um mittels des Sägeblatts 17 "getrimmt" werden zu können. Das Material kann beispielsweise Kunststoff oder ein Metall, beispielsweise Aluminium, sein. Der Halter 55 kann von dem Anschlagabschnitt 53 gebildet sein, d.h. der Anschlagabschnitt 53 kann als Halter für ein separates Ausreißschutzelement 27 dienen oder selbst als Ausreißschutzelement wirksam sein, indem er entsprechend, d.h. ausreichend nahe an der Ebene, in der die durch das Sägeblatt 17 bei der Bearbeitung erzeugte Trennkante des Werkstücks liegt, positioniert wird. Ein "Trimmen" auch eines als Ausreißschutzelement wirksamen Anschlagsabschnitts durch Einsägen kann vorgesehen sein. Damit betrifft die Erfindung auch die Verwendung eines von der Auflagefläche abstehenden Werkstückanschlags als Spanreißschutz für die mit diesem Anschlag zusammenwirkende Werkstückseite. Ein Werkstückanschlag, der gleichzeitig als Spanreißschutz verwendet wird, braucht nicht so vergleichsweise komplex aufgebaut zu sein wie der Anschlagabschnitt 53. Ein z.B. quaderförmiges, insbesondere stab- oder kastenförmiges einfaches Anschlagelement aus zum Beispiel Kunststoff, Holz oder Aluminium oder einem anderen mit einem herkömmliches Sägeblatt einsägbaren Material kann gemäß einigen Ausführungsformen als entweder fester oder verschiebbarer und somit nachstellbarer und folglich "trimmbarer" Spanreißschutz vorgesehen sein.

Das separate Ausreißschutzelement 27 stößt an die am Einlegestück 59 der Auflage 11a angebrachte Gummilippe 37 an, so dass die beiden Gummilippen 27, 37 und deren Ausreißschutzbereiche 29, 38 zusammen einen Spanschutzwinkel von 90° bilden. Hierdurch sind während der Bearbeitung sowohl die auf der Auflagefläche 21 aufliegende Unterseite des jeweiligen Werkstücks als auch die an der Anschlagfläche 23 des Anschlagabschnitts 53 anliegende Vorderseite des Werkstücks vor einem Ausreißen geschützt.

In einer abgewandelten Ausführungsform, die in Fig. 4 zusätzlich dargestellt ist, kann die Anschlageinrichtung 52 als Halter für das Ausreißschutzelement 27 ein Führungsstück 65 mit zwei teilkreisförmigen Führungsschlitzen 67 aufweisen, die es ermöglichen, den Spanreißschutzabschnitt 11b um eine parallel zur Bearbeitungsrichtung 19 in der Auflagefläche 21 verlaufende virtuelle Achse zu verschwenken und so eine Spanabhebung an der Vorderseite des Werkstücks auch bei Gehrungsschnitten zu unterbinden.

Während in Fig. 4 der Anschlagabschnitt 53 und somit die Anschlagfläche 23 senkrecht zur Auflagefläche 21, also zur Arbeitstischebene, verläuft, kann eine zusätzliche Verstellmöglichkeit der Anschlageinrichtung 52 vorgesehen sein, womit der Anschlagabschnitt 53 samt Halter 55 und Ausreißschutzelement 27 um eine senkrecht zur Bearbeitungsrichtung 19 und in der Auflagefläche 21 oder parallel zur Auflagefläche 21 verlaufende Achse verschwenkt werden kann, bei der es sich je nach Ausgestaltung der Schwenkeinrichtung um eine virtuelle Achse handeln kann, aber nicht muss. Hierdurch kann der Winkel zwischen der Anschlagfläche 23 und der Auflagefläche 21 verändert und auf beliebige oder bestimmte vorgegebene Werte eingestellt werden, z.B. auf einen Winkel von 45°.

Ferner kann vorgesehen sein, die Anschlageinrichtung 52 insgesamt oder den Anschlagabschnitt 53 samt Halter 55 und Ausreißschutzelement 27 um eine senkrecht zur Auflagefläche 21 verlaufende Achse zu verschwenken. Die Anschlagfläche 23 verläuft dann weiterhin senkrecht zur Auflagefläche 21, aber nicht mehr senkrecht zur Bearbeitungsrichtung 19. Ein Werkstück kann folglich derart mit seiner Vorderseite an die Anschlagfläche 23 angelegt werden, dass die Vorderseite schräg zur Bearbeitungsrichtung 19 verläuft, so dass auf diese Weise Schrägschnitte am Werkstück ausgeführt werden können.

In einer nicht dargestellten abgewandelten Ausführungsform kann anstelle eines separaten Ausreißschutzelements 27 ein Endabschnitt des Anschlagabschnitts 53 als Spanreißschutzabschnitt ausgebildet sein und einen Ausreißschutzbereich aufweisen, der eine Spanabhebung an der Vorderseite des Werkstücks unterbindet. Dieser Endabschnitt des Anschlagabschnitts 53 kann aus einem Kunststoff- oder Gummimaterial hergestellt sein, das bei einer Erstbearbeitung mittels des Sägeblatts eingesägt werden kann, um auf diese Weise "getrimmt" zu werden, d.h. eine Anpassung des Spanreißschutzes an die jeweilige Bearbeitungssituation zu erzielen.

Wie Fig. 5 zeigt, können in einer Abwandlung am Halter 55 zwei separate Ausreißschutzelemente 27 auf beiden Seiten der durch das Sägeblatt definierten Trennebene angeordnet sein, zwischen denen ein schlitzförmiger Durchgang 69 für das Sägeblatt vorhanden ist. Alternativ kann ein zusammenhängendes, einteiliges Ausreißschutzelement vorgesehen sein, das mit einem einen Durchgang für das Sägeblatt bildenden Schlitz versehen ist. Durch einen solchen beidseitig wirksamen Spanreißschutz wird auf beiden Seiten des Sägeblatts an den durch die Bearbeitung an der Vorderseite des Werkstücks entstehenden Trennkanten eine Spanabhebung unterbunden.

Eine entsprechende beidseitige Wirksamkeit kann auch in der Auflagefläche 21 vorgesehen sein, indem - anders als in Fig. 5 dargestellt - auf beiden Seiten des in dem Einlegestück 59 der Auflage 11a ausgebildeten Schlitzes 57 eine insbesondere als Gummilippe ausgebildete Spanreißschutzeinheit 37 angeordnet ist. Auf diese Weise kann auch die Unterseite des jeweiligen Werkstücks an beiden Trennkanten vor einer Spanabhebung geschützt werden.

Auch für eine solche weitere Spanreißschutzeinheit kann dann eine Nachstellfunktion realisiert werden, wie sie nachstehend anhand von Fig. 6 beschrieben wird.

Fig. 6 zeigt in einem Schnitt senkrecht zur Auflagefläche 21 den Halter 59a, an dem die Spanreißschutzeinheit 37 auswechselbar angebracht ist. Der Halter 59a dient als Nachstellabschnitt, der - wie durch den Doppelpfeil angedeutet - parallel zur Auflagefläche 21 verschoben werden kann, um den Ausreißschutzbereich 38 der Spanreißschutzeinheit 37 weiter in den Schlitz 57 hinein nachstellen zu können.

Hierzu ist der Halter 59a an der Unterseite des Einlegestücks 59 verschiebbar gelagert. Zum Verschieben des Halters 59a dienen zwei längs des Schlitzes 57 mit Abstand voneinander angeordnete, als Stellelemente dienende Exzenterstücke 61. Diese bilden eine Betätigungseinrichtung für den als Nachstellabschnitt dienenden Halter 59a. Jedes Exzenterstück 61 ist im Einlegestück 59 der Auflage verdrehbar gelagert und mit seiner Oberseite, in der ein Schlitz für einen Schraubendreher ausgebildet ist (vgl. auch Fig. 3 bis 5), gegenüber der Auflagefläche 21 etwas zurückspringend angeordnet. Ein zwei zylindrische Abschnitte unterschiedlichen Durchmessers umfassender Betätigungsabschnitt 61c des Exzenterstücks 61 trägt an seinem unteren Ende einen stiftförmigen Treibabschnitt 61a, der bezüglich der Mittelachse 61b des Betätigungsabschnitt 61c exzentrisch angeordnet ist. Der Stift 61a ragt durch ein im Halter 59a ausgebildetes Langloch 59b hindurch, so dass der Stift 61a und der Halter 59a nach Art eines Getriebes zusammenwirken, wenn der Benutzer mittels eines Schraubendrehers das Exzenterstück 61 um die Achse 61b dreht, um den Halter 59a und somit die Spanreißschutzeinheit 37 parallel zur Auflagefläche 21 relativ zum Einlegestück 59 der Auflage zu verschieben.

Hierdurch ist für den Spanreißschutz eine Nachstellfunktion realisiert, die sicherstellt, dass der Ausreißschutzbereich 38 der Spanreißschutzeinheit 37 stets weit genug in den Schlitz 57 hinein vorsteht.

In einer abgewandelten Ausgestaltung ist der Halter 59a nicht mit einer separaten Spanreißschutzeinheit 37 versehen, sondern dient selbst mit seiner in den Schlitz 57 hinein vorstehenden Seite, die dann den Ausreißschutzbereich bildet, als Spanreißschutz für die Werkstückunterseite.

Außerdem zeigt Fig. 6 die auch in Fig. 5 dargestellte Anordnung zweier Ausreißschutzelemente 27 am Halter 55, die von der Auflagefläche 21 abstehen und so einen beidseitig wirksamen Spanreißschutz für die Vorderseite des Werkstücks bilden. Der schlitzförmige Durchgang 69 zwischen den beiden Ausreißschutzelementen 27 ist mit dem im Einlegestück 59 ausgebildeten Schlitz 57 ausgerichtet. Ein beidseitiger Spanreißschutz kann - wie bereits erwähnt - auch für die Unterseite des Werkstücks vorgesehen sein. Die vorstehend beschriebene Anordnung einschließlich Nachstellfunktion aus Halter 59a, Spanreißschutzeinheit 37 und Exzenterstücken 61 befindet sich dann zusätzlich auf der anderen Seite des Schlitzes 57 am Einlegestück 59 - gewissermaßen am Schlitz 57 "gespiegelt".

### Bezugszeichenliste

- 11: Arbeitsorgan
- 11a: Auflage
- 11b: Spanreißschutzabschnitt
- 13: Werkstück
- 17: Bearbeitungswerkzeug, Sägeblatt
- 17a: Schutzhaube
- 19: Bearbeitungsrichtung
- 21: Auflagefläche
- 23: Anschlagfläche
- 27: separates Ausreißschutzelement
- 29: Ausreißschutzbereich
- 37: Spanreißschutzeinheit
- 38: Ausreißschutzbereich
- 52: Anschlageinrichtung
- 53: Anschlagabschnitt
- 55: Halter
- 57: Aussparung, Schlitz
- 59: Einlegestück, Basisabschnitt
- 59a: Halter, Nachstellabschnitt
- 59b: Langloch
- 61: Exzenterstück
- 61a: Treibabschnitt
- 61b: Achse
- 61c: Betätigungsabschnitt
- 65: Führungsstück
- 67: Führungsschlitz
- 69: Durchgang
- 71: Führungsarm
- 73: Anschlag

## Patentansprüche

1. Arbeitsorgan (11) zur Verwendung mit einem zu bearbeitenden Werkstück (13) und einer elektrischen Bearbeitungsmaschine (15) zum Bearbeiten des Werkstücks (13), wobei während der Bearbeitung ein Bearbeitungswerkzeug (17) der Maschine (15) und das Werkstück (13) relativ zueinander bewegt werden,
wobei das Arbeitsorgan eine Auflage (11a) für das Werkstück (13) umfasst, die eine Auflagefläche (21) aufweist, auf der das Werkstück (13) während der Bearbeitung mit seiner Unterseite (13a) aufliegt,
wobei in der Auflage (11a) eine an der Auflagefläche (21) offene Aussparung (57) für das Bearbeitungswerkzeug (17) ausgebildet ist, und
wobei im Bereich der Aussparung (57) eine Spanreißschutzeinheit (37) angeordnet ist, die eine durch das Einwirken des Bearbeitungswerkzeugs (17) auf das Werkstück (13) verursachte Spanabhebung an der Unterseite des Werkstücks (13) verhindert.

2. Arbeitsorgan nach Anspruch 1, wobei die Spanreißschutzeinheit (37) die Aussparung (57) zumindest ungefähr in der Ebene der Auflagefläche (21) wenigstens bereichsweise begrenzt oder wobei die Spanreißschutzeinheit (37) parallel zur Auflagefläche (21) in die Aussparung (57) hinein vorsteht, und/oder wobei die Spanreißschutzeinheit (37) oder zumindest ein Ausreißschutzbereich (29) der Spanreißschutzeinheit (37) aus einem anderen Material besteht als die Auflage (11a) an der Auflagefläche (21).

3. Arbeitsorgan nach Anspruch 1 oder 2, wobei die Aussparung (57) schlitzförmig ausgebildet ist,
und/oder wobei die Spanreißschutzeinheit (37) entweder einseitig oder beidseitig einer von dem Bearbeitungswerkzeug (17) definierten Trennebene angeordnet ist,
und/oder wobei die Spanreißschutzeinheit (37), insbesondere lösbar, an der Auflage (11a) angebracht ist.

4. Arbeitsorgan nach einem der vorhergehenden Ansprüche, wobei die Spanreißschutzeinheit (37), insbesondere lösbar, an einem, bevorzugt ein separates Bauteil bildenden, Halter (59a) angeordnet ist, insbesondere wobei der Halter (59a) an der Auflage (11a) angeordnet und insbesondere relativ zu der Auflage (11a) bewegbar ist,
insbesondere wobei der Halter (59a) an einem separaten, insbesondere platten- oder streifenförmigen, Einlegestück (59) der Auflage (11a) angeordnet ist, das in einem eingelegten Zustand zusammen mit zumindest einem benachbarten Teil der Auflage (11a) die Auflagefläche (21) bildet, insbesondere wobei die Aussparung (57) in dem Einlegestück (59) ausgebildet
ist,
insbesondere wobei das Einlegestück (59) eine ohne das Einlegestück (59) in der Auflage (11a) vorhandene Lücke zumindest im Wesentlichen vollständig ausfüllt.

5. Arbeitsorgan nach Anspruch 4, wobei die Oberseite des Einlegestücks (59) einen Teil der Auflagefläche (21) der Auflage (11a) bildet,
und/oder wobei das Einlegestück (59) aus dem gleichen Material besteht wie der zumindest eine benachbarte Teil der Auflage (11a).

6. Arbeitsorgan nach einem der vorhergehenden Ansprüche, wobei die Spanreißschutzeinheit (37) ein separates Ausreißschutzelement ist oder ein separates Ausreißschutzelement umfasst,
insbesondere wobei das Ausreißschutzelement (37), insbesondere werkzeuglos, auswechselbar an der Auflage (11a) anbringbar ist, insbesondere an einem separaten Halter (59a) der Auflage (11a).

7. Arbeitsorgan nach Anspruch 6, wobei das Ausreißschutzelement (37) in zumindest eine an der Auflage (11a) ausgebildete Aufnahme einschiebbar, einsteckbar oder eindrückbar ist und/oder wobei das Ausreißschutzelement (37) eine langgestreckte Form aufweist und/oder wobei das Ausreißschutzelement (37) aus Kunststoff oder Gummi hergestellt ist und/oder wobei das Ausreißschutzelement (37) elastisch verformbar ist.

8. Arbeitsorgan nach einem der vorhergehenden Ansprüche, wobei die Spanreißschutzeinheit (37) durch erstmalige Bearbeitung mittels des Bearbeitungswerkzeugs (17) anpassbar ist,
und/oder wobei die Auflage (11a) mit einer Nachstellfunktion für die Spanreißschutzeinheit (37) versehen ist.

9. Arbeitsorgan nach einem der vorhergehenden Ansprüche, wobei die Spanreißschutzeinheit (37) an einer im Bereich der Aussparung (57) liegenden Seite eines Nachstellabschnitts (59a) angeordnet ist, der durch eine Betätigungseinrichtung (61) relativ zur Aussparung (57) derart bewegbar ist, dass die Spanreißschutzeinheit (37) in die Aussparung (57) hinein nachstellbar ist,
insbesondere wobei der Nachstellabschitt (59a) als ein, bevorzugt ein separates Bauteil bildender, Halter (59a) für die Spanreißschutzeinheit (37) ausgebildet ist, insbesondere wobei der Halter (59a) an der Auflage (11a), bevorzugt unterhalb der Auflagefläche (21), insbesondere an einer Unterseite der Auflage (11a), angeordnet und insbesondere relativ zu der Auflage (11a) bewegbar ist.

10. Arbeitsorgan nach Anspruch 9, wobei die Betätigungseinrichtung zumindest ein Exzenterstück (61) umfasst, das durch Betätigen, insbesondere durch Verdrehen um eine senkrecht zur Auflagefläche (21) verlaufende Achse (61b), den Nachstellabschnitt (59a) relativ zu einem Basisabschnitt (59) und relativ zur Aussparung (57) bewegt, insbesondere wobei der Basisabschnitt (59) zur Auflage (11a) gehört und einen Teil der Auflagefläche (21) bildet und vorzugsweise als ein separates, insbesondere platten- oder streifenförmiges, Einlegestück (59) der Auflage (11a) ausgebildet ist, insbesondere wobei das Exzenterstück (61) bündig mit der Auflagefläche (21) abschließt oder bezüglich der Auflagefläche (21) zurückspringend angeordnet ist und/oder wobei das Exzenterstück (61) über einen Treibabschnitt (61a), der exzentrisch bezüglich einer Achse (61b), um die das Exzenterstück (61) durch Betätigen verdrehbar ist, an einem Betätigungsabschnitt (61c) des Exzenterstücks (61) angeordnet ist, den Nachstellabschnitt (59a) zum Bewegen beaufschlagt, insbesondere wobei der Treibabschnitt (61a) ein sich parallel zur Achse (61b) erstreckender Stift ist, der mit einem Langloch (59b) des Nachstellabschnitts (59a) zusammenwirkt.

11. Arbeitsorgan nach einem der vorhergehenden Ansprüche, wobei zusätzlich zu der Spanreißschutzeinheit (37) ein Spanreißschutzabschnitt (11b) vorgesehen ist, der eine durch das Einwirken des Bearbeitungswerkzeugs (17) auf das Werkstück (13) verursachte Spanabhebung an einer von der Unterseite verschiedenen Seite (13a) des Werkstücks (13) verhindert, wobei der Spanreißschutzabschnitt (11b) von der Auflagefläche (21) absteht, insbesondere wobei die Spanreißschutzeinheit (37), insbesondere ein Ausreißschutzbereich (38) der Spanreißschutzeinheit (37), zusammen mit dem Spanreißschutzabschnitt (11b), insbesondere einem Ausreißschutzbereich (29) des Spanreißschutzabschnitts (11b), einen von 180° verschiedenen, insbesondere unterschiedlich einstellbaren, Spanschutzwinkel bildet, der eine Ebene aufspannt, die einen von 0° verschiedenen, insbesondere unterschiedlich einstellbaren, Winkel mit der Auflagefläche (21) einschließt.

12. Arbeitsorgan nach Anspruch 11, wobei der Spanreißschutzabschnitt (11b) als eine separate Baueinheit ausgebildet ist, die mit der Auflage (11a) lösbar verbunden ist,
insbesondere wobei der Spanreißschutzabschnitt (11b) mit der Oberseite der Auflage (11a), insbesondere lösbar, verbunden ist, oder wobei der Spanreißschutzabschnitt (11b) ein Bestandteil einer Anschlageinrichtung (52) ist, die mit der Auflage (11a), insbesondere lösbar, koppelbar und als, insbesondere verstellbarer, Anschlagabschnitt (53) für das Werkstück (13) dient.

13. Arbeitsorgan nach einem der vorhergehenden Ansprüche, wobei die Auflage (11a) von einem Arbeitstisch einer Tischkreissäge oder einer Unterflur-Zugsäge oder von einer Auflage einer Kappsäge oder einer Kapp-Zugsäge gebildet ist.

14. Bearbeitungssystem mit wenigstens einer elektrischen Bearbeitungsmaschine (15) zum Bearbeiten eines Werkstücks (13) und mit zumindest einem Arbeitsorgan (11) nach einem der vorhergehenden Ansprüche, insbesondere wobei die Spanreißschutzeinheit (37) bis an eine Ebene heranreicht, die durch das Bearbeitungswerkzeug (17) definiert ist und in der eine durch Bearbeiten mit dem Bearbeitungswerkzeug (17) entstehende Trennkante des Werkstücks (13) liegt.

15. Anordnung aus einem Einlegestück (59) samt Halter (59a) und einer Spanreißschutzeinheit (37) eines Arbeitsorgans (11) nach einem der Ansprüche 1 bis 13.
